# EUROPÄISCHE PATENTSCHRIFT

(11) **EP 0 412 308 B1**
(45) Veröffentlichungstag und Bekanntmachung des Hinweises auf die Patenterteilung: **01.02.1995**
(21) Anmeldenummer: 90113319.9
(22) Anmeldetag: 12.07.1990
(51) Int. Cl.: G06F 3/023

(54) **Elektronischer Rechner mit Darstellung der programmierbaren Eingabefunktion der Tasten**
Electronic calculator with softkey function display
Calculateur électronique ayant une représentation des fonctions des touches programmables

(30) Priorität: 10.08.1989 DE 3926460
(43) Veröffentlichungstag der Anmeldung: 13.02.1991
(73) Patentinhaber: PRÜFTECHNIK DIETER BUSCH AG, 85737 Ismaning (DE)
(72) Erfinder: Lysen, Heinrich, Dipl.-Ing. (FH), D-8000 München 40 (DE)
(74) Vertreter: Hieke, Kurt

(56) Entgegenhaltungen:
- EP-A- 0 171 663
- DE-A- 3 223 176
- DE-A- 3 709 399
- US-A- 4 697 231
- IEEE SPECTRUM. vol. 20, no. 10, Oktober 1983, NEW YORK US Seiten 40 - 45; Hagelbarger et al.: "Experiments in teleterminal design"

## Beschreibung

Die Erfindung bezieht sich auf einen elektronischen Rechner gemäß dem Oberbegriff des Patentanspruchs 1.

Rechner dieser Art sind bekannt. Die Tasten ihrer Eingabetastatur werden als Softkeys bezeichnet, weil sie keine fest vorbestimmte Eingabefunktion haben, sondern diese programmabhängig, also mittels der Software, im Zuge der Abarbeitung eines Programms variabel ist. Bei den bekannten Rechnern gemäß dem Oberbegriff des Patentanspruchs 1 wird eine gewisse Bedienerfreundlichkeit in Verbindung mit den nahe beim Displayfeld außerhalb von diesem angeordneten Softkeys dadurch erreicht, daß auf einem den Softkeys benachbarten Randstreifen des Displayfeldes unmittelbar bei den einzelnen Softkeys deren jeweilige Eingabefunktion alphanumerisch angezeigt wird. Dies hat jedoch verschiedene Nachteile. Die alphanumerische Anzeige der Eingabefunktion der Softkeys beansprucht häufig einen breiten Streifen des Displayfeldes, der dann für die Wiedergabe der anderen Informationen auf dem Displayfeld fehlt. Deshalb beschränkte man sich bei den bekannten gattungsgemäßen Rechnern darauf, nur entlang eines beschränkten Teiles des Außenumfangs des Displayfeldes, meistens nur entlang einer Seite des Rechtecks, Softkeys anzuordnen. Dies wiederum begrenzt die Anzahl verfügbarer Softkeys. Des weiteren besteht keine unmittelbar am Displayfeld erkennbare Verknüpfung zwischen dem jeweiligen Softkey und anderweitigen, alphanumerisch oder graphisch auf dem Displayfeld wiedergegebenen Informationen, so daß diese Verknüpfung vom Benutzer gedanklich vorgenommen werden muß.

Eine unmittelbare Verknüpfung der Eingabe mit der Darstellung auf einem Bildschirm ist in Form der sogenannten sensitiven Bildschirme bekannt, bei denen durch Tippen auf den Bildschirm bestimmte gewüsnchte Rechnerfunktionen in Gang setzbar sind. Diese sensitiven Bildschirme sind jedoch industriell nicht brauchbar, da im industriellen Einsatz die Gefahr der Verschmutzung des Bildschirmes beim häufigen Tippen auf den Schirm besteht. Außerdem sind relativ eng beieinanderliegende Punkte auf dem Bildschirm nicht sicher aufrufbar, und es ist auch nicht ohne weiteres erkennbar, welche Teile des Displayfeldes bzw. der darin wiedergegebenen Information im aktuellen Zustand bedienbar sind. Hinzu kommt, daß sensitive Bildschirme kostspielig sind.

Der Erfindung liegt die Aufgabe zugrunde, einen Rechner gemäß dem Oberbergriff des Patentanspruchs 1 zu schaffen, bei dem die Anzeige der jeweiligen Softkey-Funktion auf dem Displayfeld praktisch keinen für die Darstellung anderweitiger Informationen benötigten Platz erfordert, die Verknüpfung der jeweiligen Eingabefunktion eines Softkeys mit einer alphanumerischen Anzeige oder Graphik und/oder Teilen hiervon auf dem Displayfeld unmittelbar erkennbar ist und bei dem auch sehr nahe beieinanderliegende Punkte auf dem Displayfeld mit den einzelnen Softkeys gesondert ansteuerbar sind.

Die vorstehende Aufgabe wird durch die im Kennzeichnungsteil des Patentanspruchs 1 genannten Merkmale gelöst.

Es ist zwar bekannt, Symbole, graphische Darstellungen und Textstellen auf dem Displayfeld durch Bezugslinien einander zuzuordnen (DE-A-3223176, EP-A-0171663). Auch sind feste Verbindungslinien auf dem Gehäuse zwischen Tasten und Displayfeld bekannt (US-A-4697231), nicht aber veränderbare Bezugslinien auf dem Displayfeld.

Bei dem erfindungsgemäßen Rechner nehmen die programmgesteuert darstellbaren Bezugslinien zwischen den einzelnen Softkeys und auf dem Displayfeld angezeigten Informationen alphanumerischer oder graphischer Art, auf die mit dem jeweiligen Softkey Einfluß genommen werden kann, praktisch keinen sonst für die Darstellung dieser Informationen verfügbaren Platz weg. Außerdem ist die Verknüpfung des jeweiligen Softkeys mit einer bestimmten, auf dem Displayfeld ablesbaren Information durch die Bezugsstriche für den benutzer unmittelbar am Displayfeld erkennbar. Die Bezugslinien können von den einzelnen Softkeys aus auch sicher an sehr nahe beieinanderliegende Punkte auf dem Displayfeld herangeführt werden. Schließlich besteht ein weiterer großer Vorteil auch darin, daß wegen des praktisch fehlenden Platzbedarfs für die Wiedergabe der Softkey-Funktionen auf dem Displayfeld, Softkeys rund um das Displayfeld herum sogar lückenlos in einer gegenüber dem eingangs besprochenen bekannten Rechner erehblich größeren Anzahl angeordnet werden können. Es ist beispielsweise ohne weiteres möglich, mehr als vierundzwanzig wenigstens teilweise als Softkeys zu betreibende Tasten zur Erfassung des gesamten Alphabets einschließlich einiger Sonderfunktionstasten um ein vergleichsweise kleines Displayfeld herum anzuordnen, so daß keine alphanumerische Eingabetastatur zusätzlich benötigt wird. Demgegenüber ist bei den eingangs besprochenen bekannten Rechnern neben den Softkeys noch eine besondere alphanumerische Eingabetastatur erforderlich, da sich diese wegen ihrer Vielzahl benötigter Tasten mit den bei den bekannten Rechnern nur in beschränkter Anzahl beim Displayfeld zur Verfügung stellbaren Softkeys nicht realisieren läßt.

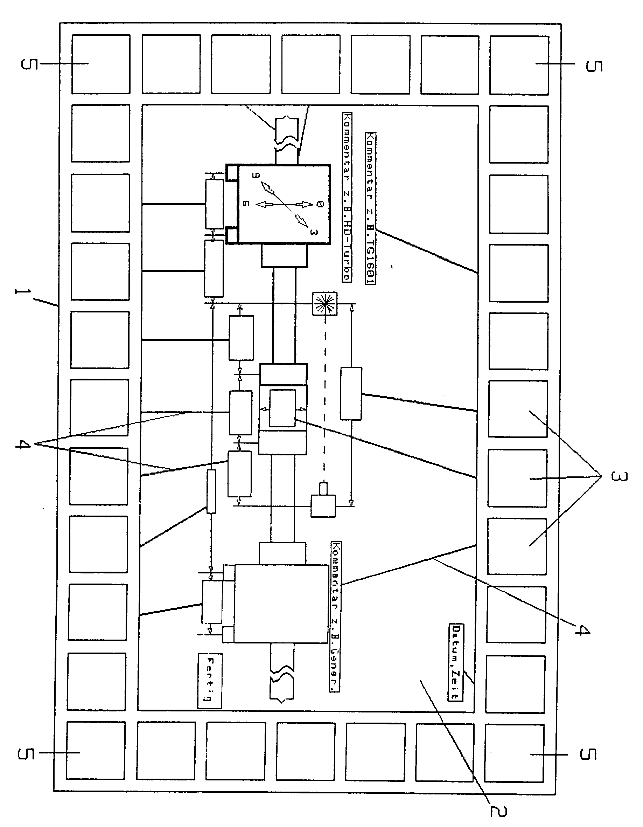

Die einzige Figur der Zeichnung zeigt als Ausführungsbeispiel der Erfindung in Draufsicht einen Rechner 1 mit einem Diplayfeld 2 und einer Vielzahl von Softkeys 3, die rund um das Displayfeld 2 herum angeordnet sind. Die Softkeys 3 sind jeweils unter der Steuerung durch das gerade im Abarbeiten begriffene Rechenprogramm durch auf dem Displayfeld 2 dargestellte Bezugsstriche 4 mit bestimmten Teilen eines ebenfalls auf dem Displayfeld 2 wiedergegebenen Bildes, hier einer mit alphanumerischen Eingabeblöcken gemischten Graphik in Form einer schematischen Darstellung zweier Maschinen mit gekuppelten Wellen, verknüpft, auf dessen Teile sie jeweils einen funktionellen Einfluß haben. Die Bezugsstrichführung ist durch das Programm variabel, so daß jeder einzelne Softkey 3 im Verlaufe der Abwicklung des Rechenprogramms eine Vielzahl verschiedener Funktionen ausführen kann, die, auch hinsichtlich ihrer Bedeutung für den angesteuerten Bildteil, unmittelbar auf dem Displayfeld zu erkennen sind.

Unter den Softkeys 3 können sich auch Hardkeys 5 von fester, unveränderbarer Funktion befinden. Besonders günstig sind für Hardkeys 5 die vier Eckplätze 6, die wegen der nötigen Anordnung der Softkeys 3 mit direkt an das Displayfeld 2 angrenzender Längenerstreckung zwecks Zuordnungsmöglichkeit eines Bezugsstriches 4, nicht mit einem Softkey 3 belegt werden können.

Bei dem in der Zeichnung dargestellten Rechner 1 ist wegen der Vielzahl von Softkeys, die um das ganze Displayfeld 2 herum lückenlos angeordnet werden können, eine gesonderte alphanumerische Eingabetastatatur entbehrlich. Ihre Funktion können die Softkeys -ggf. in Verbindung mit einem besonderen Programmschritt- übernehmen.

## Patentansprüche

1. Elektronischer Rechner mit einem Displayfeld und einer Eingabetastatur aus nahe beim Displayfeld angeordneten Tasten mit programmierbarer, auf dem Displayfeld angezeigter Eingabefunktion (Softkeys), **gekennzeichnet durch** die Verknüpfung der auf dem Displayfeld (2) wiedergegebenen alphanumerischen Information und/oder Graphik oder von Teilen hiervon mit den Softkeys (3) durch softwareabhängige Darstellung von sich dazwischen erstreckenden Bezugslinien (4) auf dem Displayfeld (2).

2. Rechner gemäß Anspruch 1, **dadurch gekennzeichnet**, daß Softkeys (3) um das Displayfeld (2) herum angeordnet sind.

3. Rechner nach Anspruch 1 oder 2, **dadurch gekennzeichnet**, daß die Softkeys (3) mit Hardkeys (5) von festgelegter Funktion gemischt sind.

4. Rechner nach Anspruch 3, **dadurch gekennzeichnet**, daß die Hardkeys (5) an den Ecken des Displayfeldes (2) angeordnet sind.

5. Rechner nach Anspruch 2 und Anspruch 3 oder 4, **dadurch gekennzeichnet**, daß Softkeys (3) ggf. mit Hardkeys (5) lückenlos um das Displayfeld (2) herum angeordnet sind.

## Claims

1. Electronic computer with a display field and an input keyboard of keys, which are arranged near to the display field, with programmable input function (softkeys) indicated on the display field, characterised by the logical interlinking of the alphanumeric information and/or graphics or parts thereof reproduced on the display field (2) with the softkeys (3) by software-dependent representation of reference lines (4) extending therebetween on the display field (2).

2. Computer according to claim 1, characterised thereby, that softkeys (3) are arranged around the display field (2).

3. Computer according to claim 1 or 2, characterised thereby, that the softkeys (3) are mixed with hardkeys (5) of fixed function.

4. Computer according to claim 3, characterised thereby, that the hardkeys (5) are arranged at the corners of the display field (2).

5. Computer according to claim 2 and claim 3 or 4, characterised thereby, that the softkeys (3) are in a given case with hardkeys (5) arranged without gap around the display field (2).

## Revendications

1. Calculateur électronique comportant un écran de visualisation et un clavier d'introduction constitué de touches, qui sont disposées à proximité de l'écran de visualisation et qui ont une fonction d'introduction (Softkeys) programmable et indiquée sur l'écran de visualisation, caractérisé par la combinaison de l'information alphanumérique restituée sur l'écran (2) de visualisation et/ou d'un graphique ou de parties de ceux-ci avec les touches programmables (3) par représentation en fonction du logiciel, de lignes (4) de référence s'étendant entre ces touches et l'information et/ou le graphique ou les parties de ceux-ci, sur l'écran (2) de visualisation.

2. Calculateur suivant la revendication 1, caractérisé en ce que des touches (3) programmables sont disposées tout autour de l'écran (2) de visualisation.

3. Calculateur suivant la revendication 1 ou 2, caractérisé en ce que les touches (3) programmables sont mélangées avec des touches (5) matérielles ayant une fonction fixe.

4. Calculateur suivant la revendication 3, caractérisé en ce que les touches (5) matérielles sont disposées aux coins de l'écran (2) de visualisation.

5. Calculateur suivant la revendication 2, 3 ou 4, caractérisé en ce que des touches (3) programmables sont disposées, éventuellement avec des touches (5) matérielles tout autour de l'écran (2) de visualisation et sans vides.
